# EUROPÄISCHE PATENTSCHRIFT

(11) **EP 1 784 368 B1**
(45) Veröffentlichungstag und Bekanntmachung des Hinweises auf die Patenterteilung: **21.05.2008**
(21) Anmeldenummer: 05777540.5
(22) Anmeldetag: 23.08.2005
(51) Int. Cl.: C03C 17/02, C03C 17/25, C03C 17/00

(54) **BAUTEIL MIT EINER REFLEKTORSCHICHT SOWIE VERFAHREN FÜR SEINE HERSTELLUNG**
COMPONENT COMPRISING A REFLECTOR LAYER, AND METHOD FOR THE PRODUCTION THEREOF
COMPOSANT POURVU D'UNE COUCHE REFLECHISSANTE, ET SON PROCEDE DE PRODUCTION

(30) Priorität: 23.08.2004 DE 102004040833; 26.10.2004 DE 102004051846; 11.04.2005 DE 102005016732
(43) Veröffentlichungstag der Anmeldung: 16.05.2007
(73) Patentinhaber: Heraeus Quarzglas GmbH & Co. KG, 63450 Hanau (DE)
(72) Erfinder: MAUL, Armin, 36355 Grebenhain/Nösberts (DE); HERBERT, Thorsten, 63776 Mömbris (DE); WEBER, Jürgen, 63801 Kleinostheim (DE); LINOW, Sven, 64285 Darmstadt (DE); FUCHS, Stefan, 201102 Shanghai (CN); SCHREIBER, Andreas, 63633 Birstein (DE); SELLNER, Reinhard, 63579 Freigericht (DE)
(74) Vertreter: Staudt, Armin Walter
(86) Internationale Anmeldenummer: PCT/EP2005/009074
(87) Internationale Veröffentlichungsnummer: WO 2006/021416

(56) Entgegenhaltungen:
- EP-A- 0 366 090
- EP-A- 0 367 269
- WO-A-01/46079
- DE-A1- 4 440 104
- DE-B3- 10 243 954
- US-A- 5 766 680
- US-A1- 2003 129 315

## Beschreibung

Die Erfindung betrifft ein Bauteil mit einer Reflektorschicht, umfassend einen Basiskörper aus Quarzglas, dessen Oberfläche mindestens teilweise mit einer Reflektorschicht belegt ist.

Außerdem geht es in der Erfindung um ein Verfahren zur Herstellung eines derartigen Bauteils mit Reflektorschicht, indem die Oberfläche eines Basiskörpers aus Quarzglas mindestens teilweise mit einer Reflektorschicht belegt wird.

Quarzglas zeichnet sich durch einen niedrigen Ausdehnungskoeffizienten, durch optische Transparenz über einen weiten Wellenlängenbereich und durch hohe chemische und thermische Beständigkeit aus. Bauteile aus Quarzglas werden für eine Vielzahl von Anwendungen eingesetzt, wie beispielsweise in der Lampenfertigung als Hüllrohre, Kolben, Abdeckplatten oder Reflektorträger für Lampen und Strahler im ultravioletten, infraroten und sichtbaren Spektralbereich. Zum Erzeugen besonderer Eigenschaften wird Quarzglas mit anderen Substanzen dotiert.

Bei der Lampenfertigung spielen häufig die zeitliche Konstanz und der Wirkungsgrad der abgegebenen Arbeitsstrahlung eine wichtige Rolle. Um Strahlungsverluste zu minimieren, werden optische Strahler mit einem Reflektor versehen. Der Reflektor ist mit dem Strahler fest verbunden oder es handelt es sich um ein separat vom Strahler angeordnetes Reflektorbauteil. Die Oberflächen hochwertiger Reflektoren, die in chemisch aggressiver Umgebung eingesetzt werden können, ohne dass das Reflektormaterial Schaden nimmt und der Reflexionsgrad merkbar nachlässt, bestehen aus Gold.

Ein gattungsgemäßes Bauteil in Form eines mit einem Goldreflektor ausgestatteter Infrarotstrahlers ist aus der DE 40 22 100 C1 bekannt. Der Infrarotstrahler dient als Flächenstrahler und ist aus mehreren nebeneinander angeordneten Lampenrohren aus Quarzglas zusammengesetzt, die auf einer gemeinsamen Trägerplatte aus Quarzglas montiert sind, und in denen jeweils eine Heizwendel verläuft. Die Oberseite dieser Lampenrohranordnung bildet die Abstrahlfläche des Infrarot-Flächenstrahlers. Die freie Unterseite der gegenüberliegend davon angeordneten Quarzglas-Trägerplatte ist mit einer Reflektorschicht aus Gold versehen.

In der DE 198 22 829 A1 ist ein kurzwelliger Infrarotstrahler beschrieben, bei dem das Lampenrohr in Form eines sogenannten Zwillingsrohres ausgeführt ist. Hierbei ist ein Quarzglas-Hüllrohr durch einen Längssteg in zwei parallel zueinander verlaufende Teilräume unterteilt, wobei in einem oder in beiden Teilräumen eine Heizwendel verläuft. Die der Hauptabstrahlrichtung der IR-Strahlung abgewandte Seite des Zwillingsrohres ist mit einer Goldschicht belegt, die als Reflektor dient.

Reflexionsschichten aus Gold sind jedoch teuer und nur eingeschränkt temperatur- und temperaturwechselbeständig.

Zur Verringerung der Transmission oder zur Veränderung des transmittierten Lichtwellenspektrums ist es auch bekannt, Lampenkolben zu mattieren, etwa durch Ätzen mit Säure oder durch Überziehen des Lampenkolbens im Inneren mit einem teilchenförmigen, lichtstreuenden Pulver, wie etwa einer Mischung aus Ton und Siliziumdioxid.

US-A-5766680
beschreibt ein Verfahren zur Herstellung einer strukturierten Schicht aus einem anorganischen Werkstoff (glasähnlich, keramisch oder glas-keramisch) auf Substratoberflächen mittels einer Sol-Gel-Technik unter Einsatz hydrolysierbarer und polykondensierbarer Silane. Optional kann die strukturierte Schicht eine weitere Funktion haben, die durch Zusatz von feinteiligem Füllstoff erzeugt wird.

Der Erfindung liegt daher die Aufgabe zugrunde, ein Bauteil, insbesondere für den Einsatz bei der Lampen- und Reflektorfertigung bereitzustellen, das mit einer wirkungsvollen, chemisch und thermisch beständigen und dennoch preisgünstigen Reflektorschicht ausgestattet ist.

Weiterhin liegt der Erfindung die Aufgabe zugrunde, ein Verfahren zur Herstellung eines derartigen Bauteils anzugeben.

Hinsichtlich des Bauteils wird diese Aufgabe ausgehend von dem eingangs beschriebenen Quarzglas-Bauteil erfindungsgemäß dadurch gelöst, dass eine als diffuser Reflektor wirkende SiO₂-Deckschicht aus mindestens teilweise opakem Quarzglas vorgesehen ist.

Beim erfindungsgemäßen Quarzglas-Bauteil besteht die Reflektorschicht aus mindestens teilweise opakem Quarzglas. Die SiO₂-Deckschicht bedeckt den Ba-siskörper ganz oder teilweise und sie wirkt als diffuser optischer Reflektor. Sie ist vollständig oder zum größten Teil aus dotiertem oder aus undotiertem SiO₂ hergestellt.

Das Quarzglas-Bauteil wird vorzugsweise in der Lampen- und Reflektorfertigung eingesetzt, wobei es in Form eines Rohres, Kolbens, einer Kammer, Halbschale, Kugel- oder Ellipsoid-Segment, Platte, Hitzeschildes oder dergleichen vorliegt. Das Quarzglas-Bauteil ist entweder Bestandteil eines optischen Strahlers mit integriertem Reflektor, wobei dieser von der SiO₂-Deckschicht gebildet wird, oder das Bauteil bildet einen separaten Reflektor und wird in Verbindung mit einem optischen Strahler eingesetzt.

Bei dem Basiskörper handelt es sich um einen Körper aus Quarzglas, das aus synthetisch hergestellten oder aus natürlich vorkommenden Rohstoffen erzeugt ist. Das Quarzglas des Basiskörpers ist in der Regel transparent.

Es hat sich gezeigt, dass eine Deckschicht aus mindestens teilweise opakem Quarzglas einen Reflexionsgrad aufweist, der für die meisten Anwendungen genügt. Die SiO₂-Deckschicht zeichnet sich durch eine hervorragende chemische und thermische Beständigkeit und mechanische Festigkeit aus. Besonders hervorzuheben ist die hohe Temperaturwechselbeständigkeit der SiO₂-Deckschicht auf dem Quarzglas-Basiskörper.

Weiterhin ist die SiO₂-Deckschicht preisgünstig herstellbar. Eine geeignete Verfahrensweise wird weiter unten noch näher erläutert. Dabei wird auf der als Reflektor vorgesehenen Oberfläche des Basiskörpers eine Schicht eines SiO₂-Teilchen enthaltenden Schlickers aufgebracht, aus der durch anschließendes Trocknen und Verglasen die SiO₂-Deckschicht erhalten wird. Beim Verglasen ist darauf zu achten, dass die SiO₂-Deckschicht mindestens teilweise opak bleibt, damit ein ausreichender Reflexionsgrad erhalten bleibt.

Es hat sich als vorteilhaft erwiesen, wenn die SiO₂-Deckschicht in Bezug auf den Basiskörper aus arteigenem Material besteht.

Unter einem "arteigenen Material" wird hier verstanden, dass sich die SiO₂-Gehalte von Deckschicht und Basiskörpers um maximal 10 Gew.-%, vorzugsweise maximal 3 Gew.-% voneinander unterscheiden. Dadurch wird eine besonders gute Haftung der Deckschicht auf dem Basiskörper, und insbesondere eine hohe Temperaturwechselbeständigkeit dieses Verbundes erreicht.

In einer bevorzugten Ausführungsform des erfindungsgemäßen Quarzglas-Bauteils ist der Basiskörper als Quarzglas-Hüllkörper für die Aufnahme eines Strahlungsemitters ausgebildet.

Der Quarzglas-Hüllkörper umhüllt hierbei einen Strahlungsemitter, wie beispielsweise eine Heizwendel, ein Carbonband oder eine Strahlung emittierende Gasfüllung, und gleichzeitig ist ein Teil des Hüllkörpers mit der als Reflektor wirkenden SiO₂-Deckschicht versehen.

Bei einer ersten bevorzugten Ausführungsvariante des erfindungsgemäßen Bauteils ist die SiO₂-Deckschicht auf der dem Strahlungsemitter abgewandten Außenseite des Hüllkörpers vorgesehen.

Dadurch werden Beeinträchtigungen des Strahlungsemitters oder der Atmosphäre innerhalb des Hüllkörpers vermieden.

Bei einer zweiten, gleichermaßen bevorzugten Ausführungsvariante des erfindungsgemäßen Bauteils ist die SiO₂-Deckschicht auf der dem Strahlungsemitter zugewandten Innenseite des Hüllkörpers vorgesehen.

Die auf der Innenseite vorgesehene Reflektorschicht ist dem Strahlungsemitter unmittelbar benachbart, so dass Absorptionsverluste durch das Material des Hüllkörpers vermieden werden. Die Deckschicht ist auf der Innenseite des Hüllkörpers häufig leichter aufzubringen als auf der Außenseite, und insbesondere ist sie durch den Hüllkörper vor mechanischer Beschädigung geschützt.

Die folgenden Erläuterungen beziehen sich auf eine besonders bevorzugte Ausführungsform des erfindungsgemäßen Bauteils, bei der das mindestens teilweise opake SiO₂ einen Dotierstoff enthält, der im ultravioletten, sichtbaren oder infraroten Spektralbereich eine optische Absorption erzeugt und dadurch eine selektive Reflexion der Reflektorschicht bewirkt.

Die SiO₂-Deckschicht enthält hierbei einen oder mehrere Dotierstoffe, die eine selektive Reflexion der Reflektorschicht hervorrufen. Hierzu wird ein Dotierstoff eingesetzt, der im ultravioletten, sichtbaren und/oder im infraroten Spektralbereich eine oder mehrere Absorptionslinien in Quarzglas erzeugt. Dadurch ist in dem von der Reflektorschicht reflektierten Lichtwellenspektrum ein Anteil der absorbierten Strahlung nicht mehr enthalten. Insoweit wirkt die Reflektorschicht auch als Filter und kann insoweit eine ansonsten notwendige Filtermaßnahme, wie eine Dotierung des Quarzglases des Basiskörper oder eine Beschichtung mit einem Filtermaterial ersetzen oder ergänzen.

Die selektiv reflektierende SiO₂-Deckschicht im Sinne der Erfindung ist mittels des weiter unten beschriebenen Verfahrens über ein Schlickerverfahren preisgünstig herstellbar. Zur Herstellung eines wellenlängenselektiv wirkenden Reflektors werden dem Schlicker oder der porösen SiO₂-Deckschicht (vor dem Verglasen) ein oder mehrere Dotierstoffe oder ein Vorprodukt, aus dem sich im Verlauf der Weiterverarbeitung der Dotierstoff bildet, zugefügt.

Eine bevorzugte Ausführungsform des erfindungsgemäßen Bauteils mit selektiv wirkender Reflektorschicht zeichnet sich dadurch aus, dass die SiO₂-Deckschicht im Wellenlängenbereich von 200 bis 300 nm einen Reflexionskoeffizienten von mindestens 0,3 aufweist, und dass der Dotierstoff eine optische Absorptionslinie im Wellenlängenbereich oberhalb von 300 nm erzeugt.

Diese Ausführungsform ist insbesondere für solche Anwendungen geeignet, bei denen die reflektierte Arbeitsstrahlung aus dem ultravioletten Spektralbereich von Anteilen aus dem sichtbaren oder infraroten Spektralbereich vollständig oder teilweise befreit sein soll. Zum Beispiel, um das Aufwärmen eines mit UV-Strahlung bestrahlten Gutes durch IR-Strahlung zu vermindern.

Unter dem Reflexionskoeffizienten wird das Intensitätsverhältnis der senkrecht auf die Reflektor einfallenden zu der reflektierten Strahlung verstanden. Zur Messung der diffus reflektierten Strahlung ist eine Ulbrichtkugel geeignet.

Bei einer alternativen, jedoch gleichermaßen bevorzugten Variante des Bauteils mit selektiv wirkender Reflektorschicht ist vorgesehen, dass die SiO₂-Deckschicht im Wellenlängenbereich von 400 nm bis 800 nm einen Reflexionskoeffizienten von mindestens 0,3 aufweist, und dass der Dotierstoff eine optische Absorptionslinie im infraroten Wellenlängenbereich oberhalb von 1000 nm erzeugt.

Diese Ausführungsform des erfindungsgemäßen optischen Bauteils mit selektiv wirkender Reflektorschicht ist insbesondere für solche Anwendungen geeignet, bei denen die reflektierte Arbeitsstrahlung aus dem sichtbaren Spektralbereich von Anteilen aus dem infraroten Spektralbereich vollständig oder teilweise befreit sein soll. Zum Beispiel, um das Aufwärmen von Lampen oder deren Teilen, wie Elektroden und dergleichen durch IR-Strahlung zu vermindern.

Der Dotierstoff, der in Quarzglas im infraroten Spektralbereich absorbiert, umfasst bevorzugt einen oder mehrere der folgenden Substanzen: Hydroxylgruppen, V, Yb, Eu, Nd.

Um einen größeren Intensitäts- und Wellenlängenanteil der IR-Strahlung im Reflektormaterial zu absorbieren, enthält die SiO₂-Deckschicht vorteilhafterweise mehrere Dotierstoffe dieser Gruppe.

Bei einer weiteren bevorzugten Variante des Bauteils ist vorgesehen, dass die SiO₂-Deckschicht im Wellenlängenbereich von 1000 nm bis 2000 nm einen Reflexionskoeffizienten von mindestens 0,3 aufweist, und dass der Dotierstoff eine optische Absorptionslinie im ultravioletten Wellenlängenbereich zwischen 150 und 400 nm erzeugt.

Diese Ausführungsform des erfindungsgemäßen optischen Bauteils mit selektiv wirkender Reflektorschicht ist insbesondere für solche Anwendungen vorgesehen, bei denen die Arbeitsstrahlung in IR-Bereich infolge der Reflexion an der selektiv reflektierenden Schicht von Anteilen aus dem ultravioletten Spektralbereich vollständig oder teilweise befreit werden soll. Zum Beispiel, um bei Heizstrahlern im medizinischen, privaten oder industriellen Bereich einen etwaigen schädlichen UV-Anteil des IR-Lichtspektrums zu vermindern.

Bei einer weiteren bevorzugten Variante des erfindungsgemäßen Bauteils mit selektiv wirkender Reflektorschicht weist die SiO₂-Deckschicht im Wellenlängenbereich von 400 nm bis 800 nm einen Reflexionskoeffizienten von mindestens 0,3 aufweist, und dass der Dotierstoff eine optische Absorptionslinie im ultravioletten Wellenlängenbereich zwischen 150 und 400 nm erzeugt.

Diese Ausführungsform ist insbesondere für solche Anwendungen vorgesehen, bei denen die reflektierte Arbeitsstrahlung aus dem sichtbaren Spektralbereich von Anteilen aus dem ultravioletten Spektralbereich vollständig oder teilweise befreit sein soll. Zum Beispiel, bei Beleuchtungsmitteln, wie bei Halogenstrahlern, bei denen ein etwaiger gesundheitsschädlicher UV-Anteil aus dem sichtbaren Lichtspektrums entfernt werden soll.

Der Dotierstoff, der im Quarzglas der SiO₂-Deckschicht UV-Strahlung absorbiert, wird bevorzugt ausgewählt aus der Gruppe: Ti, Fe, Ce.

Um einen größeren Intensitäts- oder Wellenlängenanteil der UV-Strahlung im Reflektormaterial zu absorbieren, enthält die SiO₂-Deckschicht vorteilhafterweise mehrere Dotierstoffe dieser Gruppe.

Bei einer weiteren bevorzugten Variante des erfindungsgemäßen Bauteils mit selektiv wirkender Reflektorschicht weist die SiO₂-Deckschicht im Wellenlängenbereich von 600 nm bis 800 nm einen Reflexionskoeffizienten von mindestens 0,3 auf, wobei der Dotierstoff eine optische Absorptionslinie im sichtbaren Wellenlängenbereich zwischen 300 und 600 nm erzeugt.

Diese Ausführungsform ist insbesondere an solche Anwendungen angepasst, bei denen die reflektierte Arbeitsstrahlung aus einem ersten, längerwelligen Bereich des sichtbaren Spektrums von Anteilen aus einem zweiten, kurzwelligeren Bereich des sichtbaren Spektralbereichs vollständig oder teilweise befreit sein soll.

Durch das Ausfiltern von Anteilen des sichtbaren Lichtspektrums durch selektive Reflexion erscheint die SiO₂-Deckschicht bei dieser Ausführungsform farbig. Dadurch ist eine farbliche Gestaltung des Quarzglas-Bauteils möglich. Beispielsweise erscheint das Quarzglas rot, wenn nur oder überwiegend Rotanteile des auftreffenden Lichtspektrums reflektiert werden und die kürzerwelligen Anteile des sichtbaren Lichtes vollständig oder teilweise im Reflektormaterial absorbiert werden.

Ein geeigneter Dotierstoff für die Absorption im kurzwelligen Bereich des sichtbaren Spektralbereichs ist beispielsweise Cu oder Sm.

Umgekehrt, ist es für andere optische Anwendungen vorteilhaft, wenn die reflektierte Arbeitsstrahlung aus einem kurzwelligeren Bereich des sichtbaren Spektrums, wie beispielsweise 300 bis 400 nm, von Anteilen aus einem längerwelligen sichtbaren Spektralbereichs, zum Beispiel oberhalb von 400 nm, vollständig oder teilweise befreit wird. Dies ist mittels des erfindungsgemäßen Bauteils beispielsweise möglich, indem das Reflektormaterial mit Nd dotiert wird.

Bei einer besonders bevorzugten Ausführungsform des erfindungsgemäßen Bauteils mit selektiv wirkender Reflektorschicht enthält die SO₂-Deckschicht nanoskalige kristalline Teilchen.

Die nanoskaligen kristallinen Teilchen erzeugen infolge ihrer Größe und Zusammensetzung spezielle optische Effekte, wie beispielsweise Streuung, Polarisation oder Absorption. Sie werden dem Schlicker bei der Herstellung der SiO₂-Deckschicht zugesetzt und sie schmelzen beim Sintern oder Verglasen der Schlickerschicht nicht auf.

Vorzugsweise handelt es sich bei den nanoskaligen kristallinen Teilchen um Diamant oder Kohlenstoffnanoröhren.

Es handelt sich hierbei um hochschmelzende Kohlenstoffmodifikationen, die sich in Quarzglas chemisch inert verhalten. Kohlenstoffnanoröhren sind mikroskopisch kleine röhrenförmige Gebilde, die auch als "Carbon Nanotubes" bekannt sind.

Die optischen Effekte der nanoskaligen kristallinen Teilchen kommen besser zu Geltung, wenn die SiO₂-Deckschicht transparente Bereiche aufweist. Die verbleibende Opazität der SiO₂-Deckschicht beruht dabei ganz oder teilweise auf den zugesetzten nanoskaligen kristallinen Teilchen.

Je dicker die SiO₂-Deckschicht ausgebildet ist, um so vollständiger erfolgt die Reflexion der Strahlung. Schichtdicken oberhalb von 3 mm sind jedoch schwierig herzustellen und der zusätzliche Effekt der größeren Schichtdicke macht sich kaum noch bemerkbar. Bei SiO₂-Deckschichten mit Dicken unterhalb von 0,1 mm sind hohe Konzentration des Dotierstoffes erforderlich, was die physikalischen und chemischen Eigenschaften des Quarzglases der Deckschicht in ungünstiger Weise verändern kann.

Durch aufeinanderfolgende Schichten mit unterschiedlichen optischen Eigenschaften können besondere Effekte erzielt werden, beispielsweise Entspiegelungen oder unterschiedliche Absorptionsverläufe innerhalb der SiO₂-Deckschicht.

Hinsichtlich des Verfahrens wird die oben angegebene Aufgabe ausgehend von dem eingangs genannten Verfahren erfindungsgemäß dadurch gelöst, dass ein amorphe SiO₂-Teilchen enthaltender Schlicker erzeugt und auf der Oberfläche des Basiskörpers unter Bildung einer Schlicker-Schicht aufgebracht wird, die Schlicker-Schicht getrocknet und anschließend unter Bildung der SiO₂-Deckschicht verglast wird.

Beim erfindungsgemäßen Verfahren wird der Quarzglas-Basiskörper mittels eines Schlickergießverfahrens mit einer Deckschicht aus SiO₂ versehen. Eine besondere technische Herausforderung besteht darin, ein Reißen der Schlicker-Schicht beim Trocknen oder Verglasen zu vermeiden, obwohl das Volumen der Schicht schrumpft, ohne dass das Quarzglas des Basiskörpers entsprechend nachgeben kann.

Hierzu wird zunächst ein gießfähiger Schlicker erzeugt, der amorphe SiO₂-Teilchen enthält. Der Schlicker wird als "Schlicker-Schicht" auf dem Basiskörper aufgetragen und anschließend getrocknet und verglast. Infolge von Wechselwirkungen untereinander stabilisieren die amorphen SiO₂-Teilchen bereits die Schlicker-Schicht im pastösen und trockenen Zustand und sie fördern die Sinteraktivität, was das Sintern der getrockneten Schlicker-Schicht bei vergleichsweise niedriger Temperatur unter Ausbildung einer dichten, rissfreien SiO₂-Deckschicht ermöglicht.

Die SiO₂-Teilchen bestehen aus synthetisch hergestelltem SiO₂ oder aus gereinigtem natürlich vorkommendem Rohstoff, wie er beispielsweise in der DE 44 40 104 C2 beschrieben ist.

Der Schlicker kann neben den amorphen SiO₂-Teilchen auch Precursorkomponenten für die Bildung von SiO₂-Partikeln enthalten. Dabei handelt es sich um hydrolysierbare Siliziumverbindungen, wie sie bei Sol-Gel-Verfahren zur Herstellung von SiO₂ eingesetzt werden. Derartige Precursorkomponenten bilden infolge ihrer Hydrolyse molekulare Bindungen in der Schlicker-Schicht, führen zu einer Verfestigung und erleichtern dadurch das Sintern. Andererseits führen sie in hoher Konzentration jedoch auch zu einer hohen Trockenschwindung und können zu einer Rissbildung beitragen, was den Anteil an derartigen Precursorkomponenten im Schlicker begrenzt.

Die Teilchengröße und -verteilung der SiO₂-Teilchen hat Auswirkungen auf die Trockenschwindung der Schlicker-Schicht. So kann durch Einsatz gröberer SiO₂-Teilchen die Trockenschwindung verringert werden.

Das Trocknen der Schlicker-Schicht erfolgt durch Entzug von Feuchtigkeit bei Raumtemperatur, durch Erwärmen oder durch Gefriertrocknen. Nach dem Trocknen wird die Schlicker-Schicht verglast, indem sie auf eine hohe Temperatur erhitzt wird, die zu einem Sintern der SiO₂-Teilchen und zur Ausbildung einer dichten, rissfreien Deckschicht aus opakem oder teils opakem Quarzglas führt, und die die gesamte Oberfläche des Basiskörpers oder einen Teil davon bedeckt.

Mittels des erfindungsgemäßen Verfahrens sind SiO₂-Deckschichten mit hoher Dichte herstellbar, so dass dieses Verfahren eine bevorzugte Möglichkeit zur Herstellung der Reflektorschicht aus mindestens teilweise opakem SiO₂ bietet.

Vorzugsweise werden für die Bildung der Deckschicht SiO₂-Teilchen eingesetzt, die Teilchengröße im Bereich bis maximal 500 µm, vorzugsweise maximal 100 µm, aufweisen, wobei SiO₂-Teilchen mit Teilchengrößen im Bereich zwischen 1 µm und 50 µm den größten Volumenanteil ausmachen.

SiO₂-Teilchen in diesem Größenbereich zeigen ein vorteilhaftes Sinterverhalten und eine vergleichsweise geringe Trockenschwindung. Es hat sich gezeigt, dass bei einem derartigen Schlicker die Schlicker-Schicht besonders einfach ohne Rissbildung getrocknet und verglast werden kann. Das kann auf eine ausreichend geringe Trockenschwindung und auf Wechselwirkungen der SiO₂-Teilchen untereinander beruhen, die bis zur Ausbildung molekularer SiO₂-Bindungen führen können, und die das Trocknen und Sintern erleichtern.

Dazu tragen die polare Natur der wässrigen Phase des Schlickers sowie eine Verfahrensweise bei, bei welcher die SiO₂-Teilchen durch Nassmahlen von SiO₂-Ausgangskörnung hergestellt werden.

Hierbei wird die gewünschte Teilchengrößenverteilung durch den Homogenisierungsprozess des Schlickers eingestellt, wobei die SiO₂-Teilchen ausgehend von vergleichsweise groben Körnern mit Durchmessern zum Beispiel im Bereich zwischen 200 µm und 5000 µm beim Homogenisieren in Abhängigkeit von deren Verfestigungsgrad verkleinert werden. Beim Nassmahlen entstehen innerhalb des wässrigen Schlickers SiO₂-Teilchen jeder Größe, auch solche, die durch Wechselwirkungen untereinander bereits im Schlicker die oben beschriebenen Bindungen ausbilden, was die Stabilität den Schlicker-Schicht verbessert.

Der Cristobalitanteil in der getrockneten SiO₂-Schtickerschicht sollte höchstens 1 Gew.-% betragen, da es andernfalls beim Verglasen der Schlicker-Schicht zu einer Kristallisation kommen kann, was zum Ausschuss des Bauteils führen kann. Wesentlich ist hierbei der Einsatz von vornherein amorpher SiO₂-Teilchen.

Zum Auftragen der Schlicker-Schicht sind die an sich bekannten Verfahren geeignet, wie beispielsweise Sprühen, elektrostatisch unterstütztes Sprühen, Fluten, Schleudern, Tauchen oder Aufstreichen. Bevorzugt wird die Schlicker-Schicht jedoch durch Tauchen erzeugt.

Ein vorheriges Aufrauhen der Basiskörper-Oberfläche kann die Haftung sowohl der Schlicker-Schicht als auch der durch Verglasen daraus erzeugten dichten SiO₂-Deckschicht verbessern.

Auch durch eine geeignete Temperaturführung kann die Gefahr einer Rissbildung beim Verglasen vermindert werden. Bevorzugt erfolgt das Verglasen der getrockneten Schlicker-Schicht bei einer vergleichsweise niedrigen Maximaltemperatur im Bereich zwischen 1000 °C und 1600 °C, vorzugsweise zwischen 1100 °C und 1400 °C. In einer besonders bevorzugten Verfahrensvariante erfolgt das Verglasen der getrockneten Schlicker-Schicht in einer Wasserstoffatmosphäre.

Wegen seiner hohen Diffusionsrate in Quarzglas ist Wasserstoff für eine Wärmeübertragung besonders geeignet. Durch einen guten Wärmetransport wird erreicht, dass sich zwischen der an der Oberfläche herrschenden hohen Temperatur und der niedrigeren Temperatur im Inneren der SiO₂-Deckschicht bzw. dem noch nicht verglasten Bereich der porösen, getrockneten Schlicker-Schicht ein möglichst flacher Temperaturgradient ausbildet. Dadurch wird auch bei niedrigen Verglasungstemperaturen noch ein Fortschreiten der Schmelzfront von Außen nach Innen und damit ein Verglasen auch innerer Bereiche der Schlicker-Schicht gewährleistet. Ein Wasserstoffgehalt von mindestens 70% ist hierfür ausreichend. Außer Wasserstoff kann die Atmosphären beim Verglasen beispielsweise auch Stickstoff und vorzugsweise Helium enthalten

Sofern die Hitzeeinwirkung beim Verglasen zeitlich kurz und im Wesentlichen auf diejenigen Bereiche beschränkt sein soll, die mit einer zu verglasenden SiO₂-Schlickerschicht belegt sind, kann zum Verglasen auch eine Brennerflamme oder ein Laser eingesetzt werden. Plastische Verformungen des Bauteils werden dadurch weitgehend vermieden.

Durch mehrmaliges Durchführen des erfindungsgemäßen Verfahrens kann die Dicke der SiO₂-Deckschicht sukzessive verstärkt werden.

Es hat sich außerdem bewährt, dem Schlicker Dotierstoffe in Form von Aluminium, Stickstoff oder Kohlenstoff enthaltenden Verbindungen hinzugefügt werden.

Bei dieser Verfahrensvariante werden in die SiO₂-Deckschicht ein Dotierstoff oder mehrere Dotierstoffe eingebracht, die dem Quarzglas eine spezifische Eigenschaft verleihen, wie etwa eine Verminderung von Absorption und damit eine Verbesserung der Reflexion.

So bildet beispielsweise ein Zusatz von Aluminium im Quarzglas der Deckschicht Al₂O₃, welches sowohl zu einer Versteifung der Gtasstruktur führt und damit die Temperaturbeständigkeit der Deckschicht erhöht, als auch die Brechzahl verändert. Geeignete Ausgangssubstanzen werden im Schlicker besonders gleichmäßig verteilt, woraus letztlich eine homogene Dotierung des Quarzglases der Deckschicht resultiert.

Die auf diese Art und Weise erzeugte SiO₂-Deckschicht zeichnet sich durch hohe Haftfestigkeit auf Quarzglas aus und ist in ihren Eigenschaften durch einfache Verfahrensänderungen- etwa der Verglasungstemperatur oder der Zugabe von Dotierstoffen leicht modifizierbar und an eine Vielzahl konkreter Anwendungen anpassbar.

Zur Herstellung einer selektiv wirkenden Reflektorschicht - wie oben anhand des erfindungsgemäßen Bauteils erläutert - wird vorzugsweise in den Schlicker mindestens ein Dotierstoff eingebracht, der in Quarzglas im ultravioletten, sichtbaren oder infraroten Spektralbereich eine optische Absorption erzeugt und dadurch eine selektive Reflexion der Reflektorschicht bewirkt.

Im Schlicker wird der Dotierstoff gleichmäßig verteilt, woraus letztlich eine besonders homogene Dotierung des Quarzglases der Deckschicht resultiert. Es ist aber auch möglich, den Dotierstoff in die flüssige, getrocknete oder vorgesinterte Schlickerschicht einzubringen, solange diese noch porös ist.

Nachfolgend wird die Erfindung anhand von Ausführungsbeispielen und einer Zeichnung näher erläutert. In der Zeichnung zeigen im Einzelnen
- **Figur 1**: in schematischer Darstellung einen Reflektorplatte aus Quarzglas mit einer Reflektorschicht in Form einer SiO₂-Deckschicht im Querschnitt.,
- **Figur 2**: in schematischer Darstellung einen Infrarotstrahler in Form eines Zwillingsrohrstrahlers mit einem Hüllrohr, dessen Oberseite teilweise mit einer Schlickerschicht bzw. mit einer Reflektorschicht bedeckt ist,
- **Figur 3**: ein Heizprofil zum Verglasen einer Schlicker-Schicht auf einem Quarzglas-Basiskörper,
- **Figur 4**: eine Reflexionskurve für eine mit Cer-Praeseodymaluminat dotierte SiO₂-Deckschicht, und
- **Figur 5**: ein Diagramm mit mehreren Reflexionskurven zum Vergleich.

### Beispiel 1

Es wird ein homogener Grundschlicker hergestellt. Für einen Ansatz von 10 kg Grundschlicker (SiO₂-Wasser-Schticker) werden in einer mit Quarzglas ausgekleideten Trommelmühle mit ca. 20 Liter Volumeninhalt, 8,2 kg einer amorphen Quarzglaskörnung aus natürlichem Rohstoff mit Korngrößen im Bereich zwischen 250 µm und 650 µm mit 1,8 kg deionisiertem Wasser mit einer Leitfähigkeit von weniger als 3 µS vermischt. Die Quarzglaskörnung wurde vorab in einem Heißchlorierverfahren gereinigt; es wird darauf geachtet, dass kein Cristobalit enthalten ist.

Diese Mischung wird mittels Mahlkugeln aus Quarzglas auf einem Rollenbock bei 23 U/min während einer Dauer von 3 Tagen soweit vermahlen, dass sich ein homogener Grundschlicker mit einem Feststoffgehalt von 79 % bildet. Im Verlauf des Vermahlens kommt es infolge des in Lösung gehenden SiO₂ zu einer Absenkung des pH-Werts auf etwa 4.

Dem so erhaltenen homogenen, stabilen Grundschlicker wird weitere amorphe SiO₂-Körnung in Form sphärischer Teilchen mit einer Korngröße um 5 µm zugemischt, bis ein Feststoffgehalt von 84 Gew.-% erreicht ist. Die Mischung wird 12 Stunden lang in einer Trommelmühle bei einer Drehzahl von 25 U/min homogenisiert. Der so erhaltene Schlicker hat einen Feststoffgehalt von 84% und eine Dichte von etwa 2,0 g/cm³. Die nach dem Vermahlen der Quarzglaskörnung erhaltenen SiO₂-Teilchen im Schlicker 14 zeigen eine Teilchengrößenverteilung, die durch einen D₅₀- Wert von etwa 8 µm und durch einen D₉₀-Wert von etwa 40 µm gekennzeichnet ist. Dieser Schlicker ist dilatant. Die als "Dilatanz" bezeichnete rheologische Eigenschaft des Schlickers, zeigt sich darin, dass seine Viskosität mit der Schergeschwindigkeit zunimmt. Dies führt dazu, dass nach dem Wegfall der Scherkräfte - nach dem Auftragen des Schlickers als Schlicker-Schicht auf dem Quarzglas-Bauteil - die Viskosität zunimmt, was die Ausbildung einer gleichmäßigen Schlickerschicht erleichtert.

In den Schlicker wird einige Sekunden lang eine Quarzglas-Platte, aus der eine Reflektorplatte für einen IR-Strahler hergestellt werden soll, eingetaucht. Die Oberfläche der Quarzglas-Platte wurde vorab in Alkohol gereinigt und durch chemisches Ätzen (Frosten) auf eine mittlere Rautiefe Rₐ von 2 µm eingestellt.

Auf der Quarzglas-Platte bildet sich dadurch eine gleichmäßige, geschlossene Schlicker-Schicht mit einer Dicke von etwa 2,5 mm. Diese Schlicker-Schicht wird zunächst ca. 5 Stunden bei Raumtemperatur und anschließend mittels eines IR-Strahlers an Luft getrocknet. Die getrocknete Schlicker-Schicht ist rissfrei, und sie hat eine mittlere Dicke von etwas weniger als 2,2 mm.

Die so hergestellte und getrocknete Schlicker-Schicht wird anschließend unter Luft in einem Sinterofen verglast. Das Heizprofil umfasst eine anfänglich steile Heizrampe, während der die Schlicker-Schicht von Raumtemperatur innerhalb von einer Stunde auf eine untere Heiztemperatur von 1000 °C erhitzt wird. Auf der unteren Heiztemperatur wird die Schlicker-Schicht eine Stunde lang gehalten und anschließend über eine zweite, flache Heizrampe über vier Stunden auf eine obere Heiztemperatur von 1350 °C erhitzt. Die Haltezeit bei der oberen Heiztemperatur beträgt im Ausführungsbeispiel zwei Stunden. Danach ist die Schlicker-Schicht vollständig gesintert, opak und - soweit mit bloßem Auge erkennbar - blasenfrei.

Das anschließende Abkühlen erfolgt im Ofen unter Luft bis auf eine Temperatur von 500 °C mit einer geregelten Abkühlrate von 15°C/min und danach bei weiter geschlossenem Ofen durch freies Abkühlen.

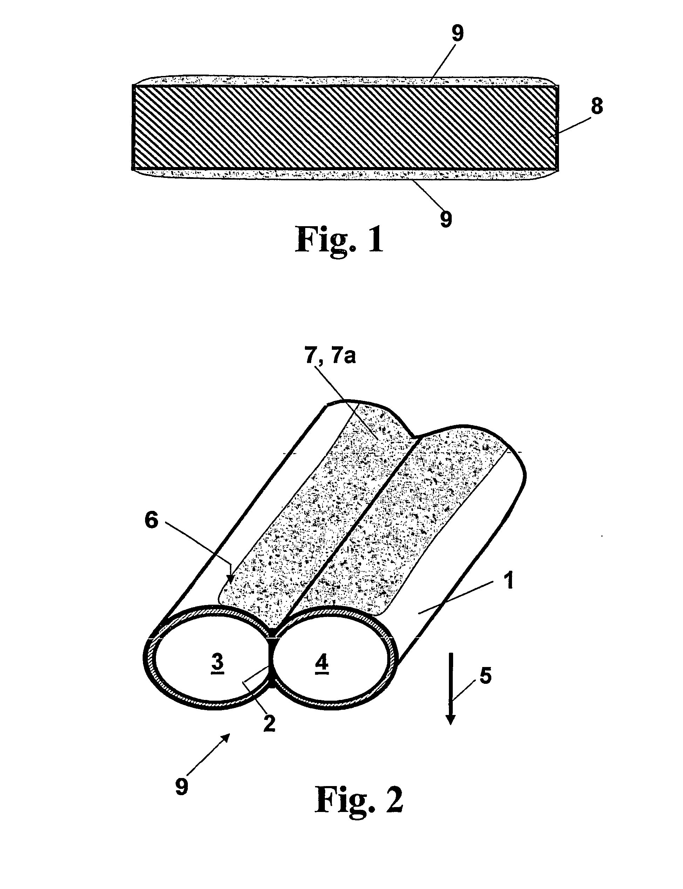

Die so erhaltene Reflektorplatte ist in **Figur 1** schematisch dargestellt. Sie besteht aus der Quarzglas-Platte 8 mit den Abmessungen 300 mm x 300 mm x 2 mm, deren Flachseiten vollständig mit einer SiO₂-Deckschicht 9 bedeckt sind, die aus opakem Quarzglas besteht und die eine mittlere Schichtdicke um 2 mm aufweist, und die sich durch Rissfreiheit und eine hohe Dichte von etwa 2,15 g/cm³ auszeichnet. Aus Darstellungsgründen ist die Si0₂-Deckschicht 9 in Figur 1 übertrieben dick eingezeichnet.

Diese Reflektorplatte bis Temperaturen oberhalb von 1100°C thermisch beständig und beispielsweise als Ersatz für Reflektorplatten aus Molybdän geeignet, die ansonsten für derartige Hochtemperaturanwendungen eingesetzt werden.

Anstelle der beidseitigen Ausbildung einer opaken SiO₂-Deckschicht kann die Quarzglas-Platte auch einseitig mit einer derartigen Schicht versehen sein. Das Aufbringen der Schlickerschicht erfolgt dabei vorzugsweise durch Aufsprühen anstelle des oben beschriebenen Tauchens.

Die SiO₂-Deckschicht 9 bewirkt eine diffuse, ungerichtete Reflexion an Phasengrenzen. Durch eine gekrümmte oder gewölbte Geometrie des Bauteils, wie sie auch sonst bei Reflektoren üblich ist, kann der diffusen Reflexion ein gerichteter Anteil aufgeprägt werden.

### Beispiel 2

Es wird ein Grundschlicker hergestellt, wie anhand Beispiel 1 beschrieben, der zur Herstellung einer Reflektorschicht auf einem Hüllrohr für einen Infrarotstrahler in Form eines sogenannten "Zwillingsrohres" aus Quarzglas eingesetzt wird.

Ein derartiges Zwillingsrohr ist in **Figur 2** schematisch dargestellt. Dieses besteht aus einem im Querschnitt 8-förmigen Hüllrohr 1 aus Quarzglas, das durch einen Mittelsteg 2 in zwei Teilräume 3, 4 unterteilt ist. Die Teilräume 3, 4 dienen zur Aufnahme jeweils einer Heizwendel, wobei die elektrischen Anschlüsse über endseitige Quetschungen aus dem Hüllrohr 1 herausgeführt sind (in Figur 2 nicht dargestellt). Die Hauptabstrahlrichtung des Zwillingsrohres 9 zeigt im Ausführungsbeispiel nach unten und ist durch den Richtungspfeil 5 symbolisiert.

Auf der der Hauptabstrahlrichtung 5 abgewandten Oberseite 6 des Zwillingsrohres 9 soll ein Reflektor ausgebildet werden. Hierzu wird die Oberfläche des Zwillingsrohres 9 mittels Alkohol, und anschließend zur Beseitigung anderer Oberflächenverunreinigungen, insbesondere von Alkali- und Erdalkakali-Verbindungen, in 30 %-iger Flusssäure gereinigt.

Danach wird der Grundschlicker auf der Oberseite 6 des Hüllrohres 1 aufgetragen. Hierzu wird das Hüllrohr 1 auf einer Haltevorrichtung montiert und auf der Oberseite 6 wird mittels einer Sprühdüse der leichtflüssige Schlicker aufgesprüht. Der Sprühvorgang wird beendet, sobald eine gleichmäßige Belegung erreicht ist. Der Schlicker trocknet an Luft sehr rasch. Die Schichtdicke der so erzeugten Schlicker-Schicht 7 liegt bei etwa 1 mm.

Die Schlicker-Schicht 7 wird daraufhin durch Ruhen an Luft über 6 Stunden langsam trocknet. Die vollständige Trocknung erfolgt unter Einsatz eines IR-Strahlers an Luft. Die getrocknete Schlicker-Schicht 7 ist rissfrei, und sie hat eine maximale Dicke von etwa 0,9 mm.

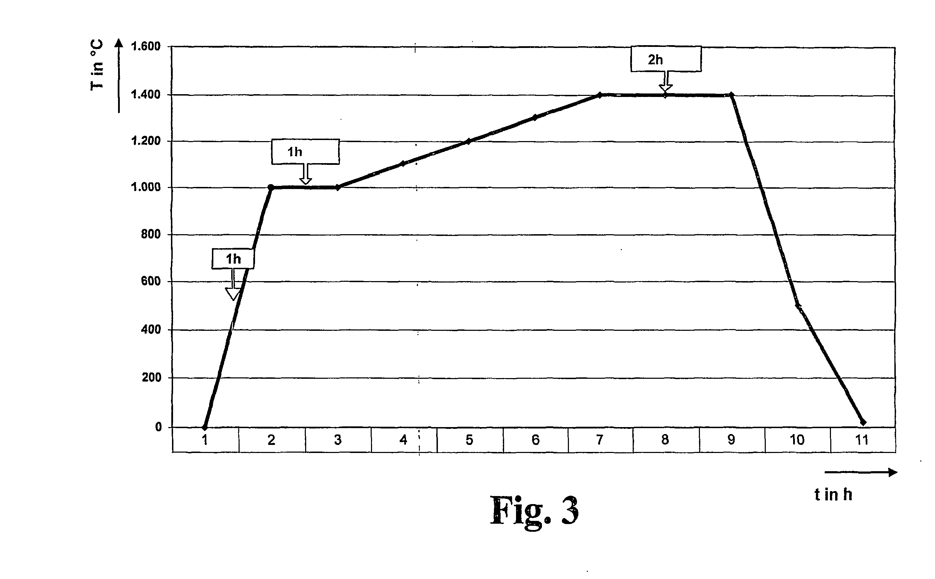

Die getrocknete Schlicker-Schicht 7 wird anschließend in einem Sinterofen unter Luftatmosphäre verglast. Das Heizprofil zum Verglasen der Schlicker-Schicht 7 ist in **Figur 3** dargestellt. Es umfasst eine Heizrampe, während der die Schlicker-Schicht 7 von Raumtemperatur innerhalb von einer Stunde auf eine untere Heiztemperatur von 1000 °C erhitzt wird. Auf dieser Heiztemperatur wird das Bauteil eine Stunde lang gehalten. Anschließend erfolgt ein langsames Aufheizen während 4 Stunden auf eine Endtemperatur von 1400 °C, die zwei Stunden lang gehalten wird. Das Abkühlen erfolgt mit einer Abkühlrampe von 15°C/min auf eine Ofentemperatur von 500 °C und danach ungeregelt bei geschlossenem Ofen.

Durch diese Temperaturbehandlung wird die Schlicker-Schicht vollständig gesintert und verfestigt, die resultierende SiO₂-Deckschicht 7a zeigt eine hohe Dichte von etwa 2,15 g/cm³, ist jedoch im Wesentlichen noch opak. Die Opazität zeigt sich dadurch, dass die direkte spektrale Transmission im Wellenlängenbereich zwischen 190 nm und 2650 nm unterhalb von 10 % liegt. Dementsprechend ergibt sich ein hoher Reflexionsgrad um 80 % im infraroten Wellenlängenbereich. Das Zwillingsrohr 9 wird für die Herstellung eines Infrarotstrahlers verwendet, wobei sich die darauf erzeugte SiO₂-Deckschicht 7a als Reflektorschicht auch für hohe Temperaturen über 1000 °C eignet.

Der Einsatz von Quarzglas-Bauteilen, die mit einem derartigen diffusen Reflektor in Form einer SiO₂-Deckschicht versehen sind, ist nicht auf die Lampenherstellung beschränkt. Derartige Reflektoren werden auch als separate Bauteile eingesetzt, beispielsweise für Strahler in Analysesystemen oder für Heizeinrichtungen bei der Solarzellenfertigung.

### Beispiel 4

Es wird ein homogener SiO₂-Schlicker hergestellt, wie anhand Beispiel 1 beschrieben. Diesem Schlicker werden 1,25 Gew.-% Cer-Praeseodymaluminat (Ce_{0,4}Pr_{0,6}AlO₃) zugesetzt. Der Ceranteil ist so gewählt, dass er in der späteren SiO₂-Deckschicht bei ca. 0,32 Gew.-% liegt und der Praseodymanteil bei ca. 0,49 Gew.-%.

Diese Mischung wird weiterverarbeitet, wie anhand Beispiel 1 beschrieben, einschließlich des Zumischens amorpher, sphärischer SiO₂-Körnung mit einer Korngröße um 5 µm und der anschließenden Homogenisierung in einer Trommelmühle.

Der so erhaltene Schlicker hat einen Feststoffgehalt von 84% und eine Dichte von etwa 2,0 g/cm³. Die nach dem Vermahlen der Quarzglaskörnung erhaltenen SiO₂-Teilchen im Schlicker 14 zeigen eine Teilchengrößenverteilung, die durch einen D₅₀- Wert von etwa 8 µm und durch einen D₉₀-Wert von etwa 40 µm gekennzeichnet ist. Es wird zur Beschichtung einer Quarzglas-Platte eingesetzt, aus der eine Reflektorplatte für einen IR-Strahler hergestellt werden soll. Hierzu wird der Schlicker auf die vorab in Alkohol gereinigte und durch chemisches Ätzen (Frosten) auf eine mittlere Rautiefe Rₐ von 2 µm eingestellte Quarzglas-Platte aufgetragen, so dass sich eine gleichmäßige, geschlossene Schlicker-Schicht mit einer Dicke von etwa 2,5 mm bildet.

Diese Schlicker-Schicht wird zunächst ca. 5 Stunden bei Raumtemperatur und anschließend mittels eines IR-Strahlers an Luft getrocknet. Die getrocknete Schlicker-Schicht ist rissfrei, und sie hat eine mittlere Dicke von etwa 2,2 mm. Die so hergestellte und getrocknete Schlicker-Schicht wird anschließend unter Luft in einem Sinterofen verglast, wie anhand Beispiel 1 beschrieben.

Danach ist die Schlicker-Schicht vollständig gesintert, opak und - soweit mit bloßem Auge erkennbar - blasenfrei.

Das anschließende Abkühlen erfolgt im Ofen unter Luft bis auf eine Temperatur von 500 °C mit einer geregelten Abkühlrate von 15°C/min und danach bei weiter geschlossenem Ofen durch freies Abkühlen.

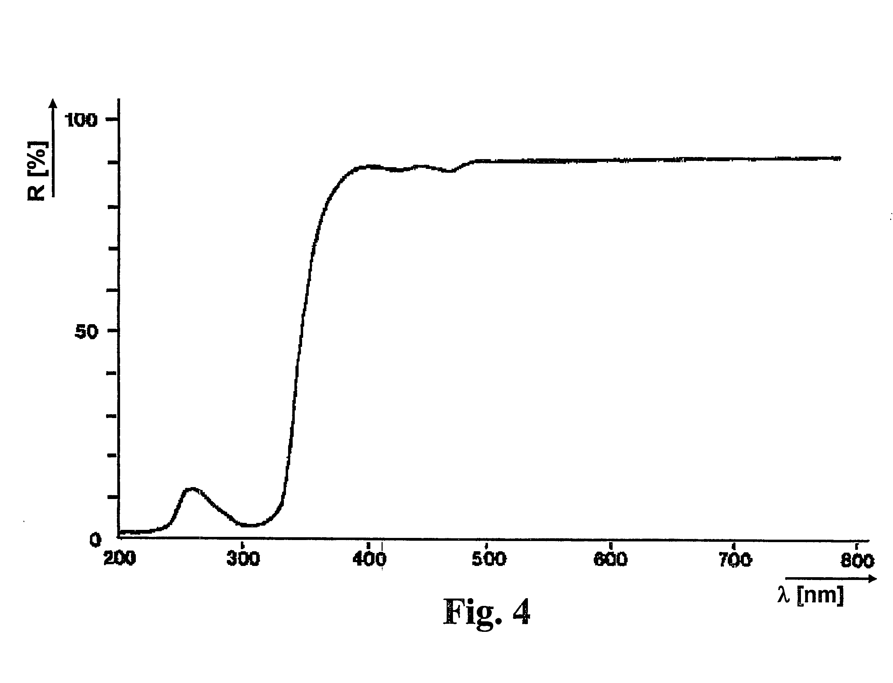

Es wird eine Reflektorplatte erhalten, deren Flachseiten vollständig mit einer SiO₂-Deckschicht bedeckt sind, die aus opakem Quarzglas besteht und die eine mittlere Schichtdicke um 2 mm aufweist, und die sich durch Rissfreiheit und eine hohe Dichte von etwa 2,15 g/cm³ auszeichnet, und deren Reflexionskurve im Wellenlängenbereich zwischen 200 und 800 nm in **Figur 4** dargestellt ist. Auf der y-Achse ist aufgetragen der Reflexionsgrad "R" in %, der sich auf das Intensitätsverhältnis der reflektierten zu der auf die SiO₂-Deckschicht auftreffenden Strahlung bezieht, und auf der x-Achse deren Wellenlänge λ in nm. Im (nicht gezeigten) infraroten Spektralbereich und im sichtbaren Spektralbereich bis hinab zu etwa 350 nm zeigt die Probe eine Reflexion von über 90 %. Im ultravioletten Spektralbereich unterhalb von 350 nm nimmt die Reflexion infolge einsetzender Absorption des zugesetzten Dotierstoffes bis auf bis auf wenige Prozent ab. Eine etwas höhere Rest-Reflexion mit einem Maximum von etwa 10% verbleibt lediglich im Wellenlängenbereich zwischen 250 und 270 nm.

Beim Einsatz der Reflektorplatte zur Reflexion infraroter Arbeitsstrahlung, wird somit der größte Teil der UV-Strahiung in der SiO₂-Deckschicht absorbiert und somit aus dem reflektierten Wellenlängenspektrum entfernt.

Die Si0₂-Deckschicht bewirkt eine diffuse, ungerichtete und wellenlängenselektive Reflexion. Durch eine gekrümmte oder gewölbte Geometrie des Bauteils, wie sie auch sonst bei Reflektoren üblich ist, kann der diffusen Reflexion ein gerichteter Anteil aufgeprägt werden.

### Beispiel 5

Es wird ein Schlicker hergestellt, wie anhand Beispiel 4 beschrieben, wobei aber anstelle des Dotierstoffes Cer-Praeseodymaluminat (Ce_{0,4}Pr_{0,6}AlO₃) ein Pulvergemisch aus Al₂O₃ und Fe₂O₃ zugesetzt wird, das so bemessen ist, dass in der späteren SiO₂-Deckschicht der Aluminiumanteil bei ca. 3 Gew.-% liegt und der Fe-Anteil bei 10 Gew.-ppm.

Der Schlicker wird auf einer Flachseite einer Quarzglas-Platte aufgetragen, getrocknet und verglast, wie dies oben anhand Beispiel 4 beschrieben ist. Es wird eine Reflektorplatte erhalten, deren eine Flachseite mit einer SiO₂-Deckschicht bedeckt sind, die aus opakem Quarzglas besteht und die eine mittlere Schichtdicke um 2 mm aufweist, und die sich durch Rissfreiheit und eine hohe Dichte von etwa 2,15 g/cm³ auszeichnet.

Nach dem Verglasen der getrockneten Schlickerschicht im Sinterofen an Luft wird eine opake SiO₂-Deckschicht erhalten, die fast im gesamten Wellenlängenbereich von 200 nm bis 3000 nm eine hohe Absorption und eine geringe Reflexion aufweist. Lediglich im Wellenlängenbereich um 700 nm wird ein geringer Reflexionsgrad unterhalb von 60% gemessen.

### Beispiel 6

Es wird eine SiO₂-Deckschicht auf einer Quarzglasplatte hergestellt, wie anhand Beispiel 5 beschrieben. Das Verglasen der Schlickerschicht erfolgt jedoch nicht unter Luft, sondern durch Erhitzen auf eine obere Heiztemperatur von 1300 °C über eine Dauer von vier Stunden unter reduzierender Atmosphäre in Gegenwart von Wasserstoff.

Diese Behandlung verändert das Reflexionsverhalten der SiO₂-Deckschicht gegenüber Beispiel 5 deutlich. Im Wellenlängenbereich von 400 nm bis 700 nm zeigt sich nun ein ausreichend hoher Reflexionsgrad um 75%. Die Absorption im UV-Bereich unterhalb von 300 nm und im IR-Bereich oberhalb von 1000 nm wird jedoch nicht nennenswert verändert.

Der Reflektor ist somit zur Reflexion von Arbeitsstrahlung im sichtbaren Spektralbereich geeignet, wobei der größte Teil der UV-Strahlung und der IR-Strahlung in der SiO₂-Deckschicht absorbiert und somit aus dem reflektierten Wellenlängenspektrum entfernt werden. Dadurch wird ein Aufheizen des beleuchteten Objektes vermieden. Zur Abfuhr der im Reflektor entstehenden Wärme können die bekannten Kühlmaßnahmen vorgesehen sein.

### Beispiel 7

Es wird ein Schlicker hergestellt, wie anhand Beispiel 5 beschrieben, wobei aber anstelle des Dotierstoffgemischs aus Al₂O₃ und Fe₂O₃ nur ein Fe₂O₃-Pulver zugesetzt wird, das so bemessen ist, dass in der späteren SiO₂-Deckschicht der Fe-Anteil bei 8 Gew.-ppm liegt.

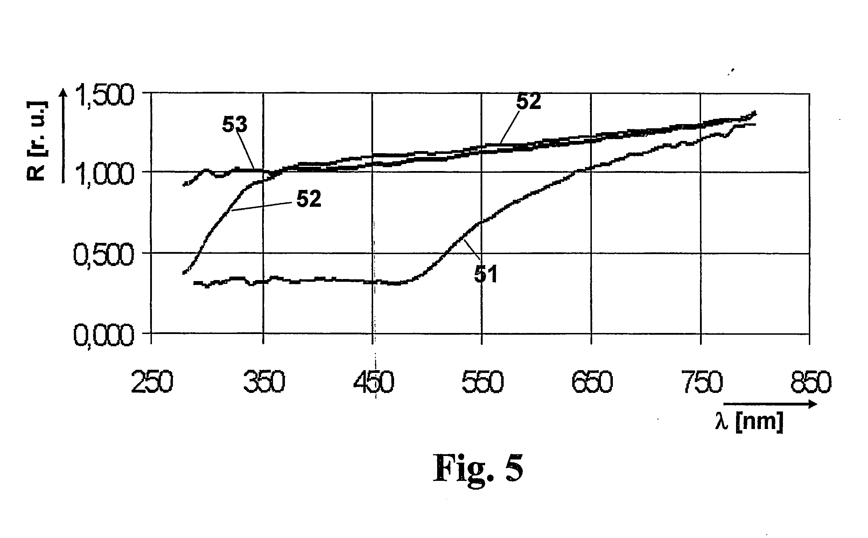

Der Schlicker wird zu einer 2 mm dicken, verglasten SiO₂-Deckschicht auf einer Quarzglas-Platte weiterverarbeitet, wie anhand Beispiel 5 beschrieben. Das Reflexionsverhalten der mit Eisen dotierten SiO₂-Deckschicht im Wellenlängenbereich von 240 bis 850 nm ist in Figur 5 als Kurve 52 dargestellt. Das Diagramm von **Figur 5** zeigt Reflexionskurven zweier unterschiedlicher SiO₂-Deckschichten gemäß der vorliegenden Erfindung im Vergleich zur Reflexionskurve einer Goldschicht über den Wellenlängenbereich zwischen 240 nm und 850 nm. Auf der y-Achse ist hier der Reflexionsgrad "R" in relativen Einheiten (bezogen auf die Reflektivität der Teflon-Auskleidung der Ulbrichtkugel) aufgetragen und auf der x-Achse die Wellenlänge λ der Arbeitsstrahlung in nm.

Die Kurve 51 zeigt den Reflexionsverlauf bei aufgedampfter Goldschicht, die Kurve 52 zeigt den Reflexionsverlauf bei einer 2 mm dicken, gemäß Beispiel 7 hergestellten SiO₂-Deckschicht, bei der also das Quarzglas mit 8 Gew.-ppm Fe dotiert ist, wobei das Verglasen unter Luft erfolgte, und die Kurve 53 zeigt den Reflexionsverlauf bei einer 2 mm dicken, gemäß Beispiel 1 hergestellten SiO₂-Deckschicht aus undotiertem SiO₂.

Daraus ist erkennbar, dass die SiO₂-Deckschicht aus undotiertem SiO₂ (Kurve 53) im Wellenlängenbereich zwischen 250 und 850 nm einen in etwa gleichmäßigen Reflexionsgrad R um 80 % aufweist. Der Reflexionsgrad R ist in diesem Wellenlängenbereich höher als der Reflexionsgrad R der Goldbeschichtung (Kurve 51). Die mit Eisen dotierte SiO₂-Deckschicht (Kurve 52) zeigt im ultravioletten Spektralbereich - bei Wellenlängen unterhalb von 350 nm - einen deutlichen Abfall in der Reflexion. Die mit Eisen dotierte SiO₂-Deckschicht ist somit für das selektive Entfernen des UV-Anteils aus der reflektierten Strahlung einer Lampe geeignet.

## Patentansprüche

1. Bauteil mit einer Reflektorschicht, das einen Reflektor für einen optischen Strahler oder einen Teil eines optischen Strahlers bildet, umfassend einen Basiskörper aus Quarzglas, dessen Oberfläche mindestens teilweise mit einer Reflektorschicht belegt ist, **dadurch gekennzeichnet, dass** eine als diffuser Reflektor wirkende SiO₂-Deckschicht (7a; 9) aus mindestens teilweise opakem SiO₂vorgesehen ist, wobei die SiO₂-Deckschicht (7a; 9) in Bezug auf den Basiskörper (1; 8) aus einem arteigenen Material besteht, bei dem sich die SiO₂-Gehalte von Deckschicht und Basiskörpers um maximal 3 Gew.-% voneinander unterscheiden.

2. Bauteil nach Anspruch 1, **dadurch gekennzeichnet, dass** der Basiskörper als Quarzglas-Hollkörper (1) für die Aufnahme eines Strahlungsemitters ausgebildet ist.

3. Bauteil nach Anspruch 2, **dadurch gekennzeichnet, dass** die SiO₂-Deckschicht (7a) auf der dem Strahlungsemitter abgewandten Außenseite (6) des Quarzglas-Hollkörpers (1) vorgesehen ist.

4. Bauteil nach Anspruch 2, **dadurch gekennzeichnet, dass** die SiO₂-Deckschicht (7a) auf der dem Strahlungsemitter zugewandten Innenseite (6) des Quarzglas-Hüllkörpers (1) vorgesehen ist.

5. Bauteil nach einem der vorhergehenden Ansprüche, **dadurch gekennzeichnet, dass** das mindestens teilweise opake SiO₂ einen Dotierstoff enthält, der im ultravioletten, sichtbaren oder infraroten Spektralbereich eine optische Absorption erzeugt und **dadurch** eine selektive Reflexion der Reflektorschicht bewirkt.

6. Bauteil nach Anspruch 5, **dadurch gekennzeichnet, dass** die SiO₂-Deckschicht im Wellenlängenbereich von 200 bis 300 nm einen Reflexionskoeffizienten von mindestens 0,3 aufweist, und dass der Dotierstoff eine optische Absorptionslinie im Wellenlängenbereich oberhalb von 300 nm erzeugt.

7. Bauteil nach Anspruch 5, **dadurch gekennzeichnet, dass** die SiO₂-Deckschicht im Wellenlängenbereich von 400 nm bis 800 nm einen ReflLexionskoeffizienten von mindestens 0,3 aufweist, und dass der Dotierstoff eine optische Absorptionslinie im infraroten Wellenlängenbereich oberhalb von 1000 nm erzeugt.

8. Bauteil nach einem der Ansprüche 5 bis 7, **dadurch gekennzeichnet, dass** der Dotierstoff einen oder mehrere der folgenden Substanzen umfasst: Hydroxylgruppen, V, Yb, Eu und Nd.

9. Bauteil nach Anspruch 5, **dadurch gekennzeichnet, dass** die SiO₂-Deckschicht im Wellenlängenbereich von 1000 nm bis 2000 nm einen Reflexionskoeffizienten von mindestens 0,3 aufweist, und dass der Dotierstoff eine optische Absorptionslinie im ultravioletten Wellenlängenbereich zwischen 150 und 400 nm erzeugt.

10. Bauteil nach Anspruch 5 oder Anspruch 7, **dadurch gekennzeichnet, dass** die SiO₂-Deckschicht im Wellenlängenbereich von 400 nm bis 800 nm einen Reflexionskoeffizienten von mindestens 0,3 aufweist, und dass der Dotierstoff eine optische Absorptionslinie im ultravioletten Wellenlängenbereich zwischen 150 und 400 nm erzeugt.

11. Bauteil nach einem der Ansprüche 5, 9 oder 10, **dadurch gekennzeichnet, dass** der Dotierstoff einen oder mehrere der folgenden Substanzen umfasst: Ti, Fe und Ce.

12. Bauteil nach Anspruch 5 oder Anspruch 10, **dadurch gekennzeichnet, dass** die SiO₂-Deckschicht im Wellenlängenbereich von 600 nm bis 800 nm einen Reflexionskoeffizienten von mindestens 0,3 aufweist, und dass der Dotierstoff eine optische Absorptionslinie im sichtbaren Wellenlängenbereich zwischen 300 und 600 nm erzeugt.

13. Bauteil nach Anspruch 5 oder 12, **dadurch gekennzeichnet, dass** der Dotierstoff der Dotierstoff einen oder mehrere der folgenden Substanzen umfasst: Cu, Sm und Nd.

14. Bauteil nach einem der vorhergehenden Ansprüche, **dadurch gekennzeichnet, dass** die SiO₂-Deckschicht nanoskalige kristalline Teilchen enthält.

15. Bauteil nach Anspruch 14, **dadurch gekennzeichnet, dass** es sich bei den nanoskaligen kristallinen Teilchen um Diamant oder um Kohlenstoffnanoröhren handelt.

16. Bauteil nach einem der vorhergehenden Ansprüche, **dadurch gekennzeichnet, dass** die SiO₂-Deckschicht Aluminium, Stickstoff oder Kohlenstoff enthält.

17. Verfahren zur Herstellung eines Quarzglas-Bauteils mit Reflektorschicht, das einen Reflektor für einen optischen Strahler oder einen Teil eines optischen Strahlers bildet, wobei die Oberfläche eines Basiskörpers (1; 8) aus Quarzglas mindestens teilweise mit einer Reflektorschicht (7a; 9) belegt wird, **dadurch gekennzeichnet, dass** ein amorphe SiO₂- Teilchen enthaltender wässriger Schlicker erzeugt und auf der Oberfläche des Basiskörpers (1; 8) unter Bildung einer Schlicker-Schicht (7) aufgebracht wird, die Schlikker-Schicht (7) getrocknet und anschließend unter Bildung der SiO₂-Deckschicht (7a, 9), die in Bezug auf den Basiskörper (1; 8) aus einem arteigenen Material besteht, bei dem sich die SiO₂-Gehaite von Deckschicht und Basiskörpers um maximal 3 Gew.-% voneinander unterscheiden, verglast wird, wobei die SiO₂-Teilchen durch Nassmahlen von SiO₂-Ausgangskörnung hergestellt werden.

18. Verfahren nach Anspruch 17, **dadurch gekennzeichnet, dass** die SiO₂-Teilchen Teilchengrößen im Bereich bis maximal 500 µm, vorzugsweise maximal 100 µm, aufweisen, wobei SiO₂-Teilchen mit Teilchengrößen im Bereich zwischen 1 µm und 50 µm den größten Volumenanteil ausmachen.

19. Verfahren nach einem der Ansprüche 17 oder 18, **dadurch gekennzeichnet, dass** das Verglasen der getrockneten Schlicker-Schicht (7a) in einer Wasserstoffatmosphäre erfolgt.

20. Verfahren nach einem der Ansprüche 17 bis 19, **dadurch gekennzeichnet, dass** dem Schlicker Dotierstoffe in Form von Aluminium, Stickstoff oder Kohlenstoff enthaltenden Verbindungen hinzugefügt werden.

21. Verfahren nach einem der Ansprüche 17 bis 20, **dadurch gekennzeichnet, dass** in den Schlicker mindestens ein Dotierstoff eingebracht wird, der in Quarzglas im ultravioletten, sichtbaren oder infraroten Spektralbereich eine optische Absorption erzeugt und **dadurch** eine selektive Reflexion der Reflektorschicht bewirkt.

## Claims

1. A component with a reflector layer, which either forms a reflector for an optical radiator or a part of an optical radiator, comprising a base body of quartz glass having a surface covered at least in part with a reflector layer, **characterized in that** there is provided an SiO₂ cover layer (7a; 9) which acts as a diffuse reflector and consists of at least partly opaque SiO₂, whereby the SiO₂ cover layer (7a; 9) consists of generic material with respect to the base body (1; 8), wherein the SiO₂ contents of cover layer and base body differ by not more than 3% by wt. from one another.

2. The component according to claim 1, **characterized in that** the base body is formed as a cladding body (1) of quartz glass for receiving a radiation emitter.

3. The component according to claim 2, **characterized in that** the SiO₂ cover layer (7a) is provided on the outside (6) of the cladding body (1) of quartz glass that is oriented away from the radiation emitter.

4. The component according to claim 2, **characterized in that** the SiO₂ cover layer (7a) is provided on the inside (6) of the cladding body (1) of quartz glass that is oriented towards the radiation emitter.

5. The component according to any one of the preceding claims, **characterized in that** the at least partly opaque SiO₂ contains a dopant which in the ultraviolet, visible or infrared spectral range produces optical absorption, thereby effecting a selective reflection of the reflector layer.

6. The component according to claim 5, **characterized in that** the SiO₂ cover layer in the wavelength range of 200 nm to 300 nm has a reflection coefficient of at least 0.3, and that the dopant produces an optical absorption line in the wavelength range above 300 nm.

7. The component according to claim 5, **characterized in that** the SiO₂ cover layer in the wavelength range of 400 nm to 800 nm has a reflection coefficient of at least 0.3, and that the dopant produces an optical absorption line in the infrared wavelength range above 1000 nm.

8. The component according to any one of claims 5 to 7, **characterized in that** the dopant comprises one or more of the following substances: hydroxyl groups, V, Yb, Eu and Nd.

9. The component according to claim 5, **characterized in that** the SiO₂ cover layer in the wavelength range of 1000 nm to 2000 nm has a reflection coefficient of at least 0.3, and that the dopant produces an optical absorption line in the ultraviolet wavelength range between 150 nm and 400 nm.

10. The component according to claim 5 or claim 7, **characterized in that** the SiO₂ cover layer in the wavelength range of 400 nm to 800 nm has a reflection coefficient of at least 0.3, and that the dopant forms an optical absorption line in the ultraviolet wavelength range between 150 nm and 400 nm.

11. The component according to any one of claims 5, 9 or 10, **characterized in that** the dopant comprises one or more of the following substances: Ti, Fe, and Ce.

12. The component according to claim 5 or 10, **characterized in that** the SiO₂ cover layer in the wavelength range of 600 nm to 800 nm has a reflection coefficient of at least 0.3, and that the dopant produces an optical absorption line in the visible wavelength range between 300 nm and 600 nm.

13. The component according to claim 5 or 12, **characterized in that** the dopant comprises one or more of the following substances: Cu, Sm and Nd.

14. The component according to any one of the preceding claims, **characterized in that** the SiO₂ cover layer contains nanoscale crystalline particles.

15. The component according to claim 14, **characterized in that** the nanoscale crystalline particles are diamond or are carbon nanotubes.

16. The component according to any one of the preceding claims, **characterized in that** the SiO₂ cover layer contains aluminum, nitrogen, or carbon.

17. A method for producing a quartz glass component with a reflector layer, which either forms a reflector for an optical radiator or a part of an optical radiator, the surface of a base body (1; 8) of quartz glass being covered at least in part with a reflector layer (7a; 9), **characterized in that** a slip containing amorphous SiO₂ particles is produced and applied to the surface of the base body (1; 8) with formation of a slip layer (7), the slip layer (7) is dried and then vitrified with formation of the SiO₂ cover layer (7a; 9), said cover layer (7a; 9) consists of generic material with respect to the base body (1; 8), wherein the SiO₂ contents of cover layer and base body differ by not more than 3% by wt. from one another, whereby the SiO₂ particles are produced by wet milling SiO₂ starting grains.

18. The method according to claim 17, **characterized in that** the SiO₂ particles have particle sizes in the range of not more than 500 µm, preferably of not more than 100 µm, SiO₂ particles with particle sizes in the range between 1 µm and 50 µm accounting for the largest volume fraction.

19. The method according to any one of claims 17 or 18, **characterized in that** the dried slip layer (7a) is vitrified in a hydrogen atmosphere.

20. The method according to any one of claims 17 to 19, **characterized in that** dopants are added to the slip in the form of compounds containing aluminum, nitrogen or carbon.

21. The method according to any one of claims 17 to 20, **characterized in that** at least one dopant is introduced into the slip, the dopant producing optical absorption in quartz glass in the ultraviolet, visible or infrared spectral range, thereby accomplishing a selective reflection of the reflector layer.

## Revendications

1. Composant avec une couche réflectrice qui forme un réflecteur pour un émetteur optique ou une partie d'un émetteur optique, comprenant un corps de base en verre de quartz, dont la surface est occupée au moins partiellement d'une couche réflectrice, **caractérisé en ce qu'**une couche de recouvrement SiO₂ (7a; 9) agissant comme un réflecteur diffus en SiO₂ opaque au moins partiellement est prévue, la couche de recouvrement SiO₂ (7a; 9) se composant par rapport au corps de base (1; 8) d'un matériau où les teneurs en SiO₂ de la couche de recouvrement et du corps de base se différencient de maximum 3 pour cent en poids l'un de l'autre.

2. Composant selon la revendication 1, **caractérisé en ce que** le corps creux en verre de quartz (1) est réalisé pour le logement d'un émetteur de rayonnement.

3. Composant selon la revendication 2, **caractérisé en ce que** la couche de recouvrement SiO₂ (7a) est prévue sur la face externe (6) détournée de l'émetteur de rayonnement, du corps d'enveloppe de verre de quartz (1).

4. Composant selon la revendication 3, **caractérisé en ce que** la couche de recouvrement SiO₂ (7a) est prévue sur la face interne (6) tournée vers l'émetteur de rayonnement, du corps d'enveloppe de verre de quartz (1).

5. Composant selon l'une des revendications précédentes, **caractérisé en ce que** le SiO₂ du moins partiellement opaque contient une substance de dopage qui génère, dans la plage spectrale ultraviolette, visible ou infrarouge, une absorption optique et provoque ainsi une réflexion sélective de la couche réflectrice.

6. Composant selon la revendication 5, **caractérisé en ce que** la couche de recouvrement SiO₂ présente dans la plage de longueurs d'onde comprise entre 200 nm et 300 nm un coefficient de réflexion d'au moins 0,3 et **en ce que** la substance de dopage génère une ligne d'absorption optique dans la plage infrarouge des longueurs d'ondes au-dessus de 300 nm.

7. Composant selon la revendication 5, **caractérisé en ce que** la couche de recouvrement SiO₂ présente, dans la plage de longueurs d'onde comprise entre 400 nm et 800 nm, un coefficient de réflexion d'au moins 0,3 et **en ce que** la substance de dopage génère une ligne d'absorption optique dans la plage infrarouge des longueurs d'ondes au-dessus de 1000 nm.

8. Composant selon l'une des revendications 5 à 7, **caractérisé en ce que** la substance de dopage comprend une ou plusieurs de substances suivantes : groupes hydroxyles, V, Yb, Eu et Nd.

9. Composant selon la revendication 5, **caractérisé en ce que** la couche de recouvrement la couche de recouvrement SiO₂ présente dans la plage de longueurs d'onde comprise entre 1000 nm et 2000 nm un coefficient de réflexion d'au moins 0,3 et **en ce que** la substance de dopage génère une ligne d'absorption optique dans la plage ultraviolette des longueurs d'ondes comprises entre 150 et 400 nm.

10. Composant selon la revendication 5 ou la revendication 7, **caractérisé en ce que** couche de recouvrement SiO₂ présente dans la plage de longueurs d'onde comprises entre 400 nm et 800 nm un coefficient de réflexion d'au moins 0,3 et **en ce que** la substance de dopage génère une ligne d'absorption optique dans la plage ultraviolette des longueurs d'ondes comprises entre 150 et 400 nm.

11. Composant selon l'une des revendications 6, 10 ou 11 , **caractérisé en ce que** la substance de dopage comprend une ou plusieurs des substances suivantes Ti, Fe et Ce.

12. Composant selon la revendication 5 ou 10, **caractérisé en ce que** la couche de recouvrement SiO₂ présente dans la plage de longueurs d'onde comprises entre 600 nm et 800 nm un coefficient de réflexion d'au moins 0,3 et **en ce que** la substance de dopage génère une ligne d'absorption optique dans la plage visible des longueurs d'ondes comprises entre 300 et 600 nm.

13. Composant selon la revendication 5 ou 12, **caractérisé en ce que** la substance de dopage comprend une ou plusieurs des substances suivantes: Cu, Sm et Nd.

14. Composant selon l'une des revendications précédentes, **caractérisé en ce que** la couche de recouvrement SiO₂ contient des particules cristallines nanoscalaires.

15. Composant selon la revendication 14, **caractérisé en ce qu'**il s'agit pour les particules cristallines nanoscalaires de diamant ou de nanotubes de carbone.

16. Composant selon l'une des revendications précédentes, **caractérisé en ce que** la couche de recouvrement SiO₂ contient de l'aluminium, de l'azote ou du carbone.

17. Procédé pour la fabrication d'un composant de verre de quartz avec une couche de réflexion qui forme un réflecteur pour un émetteur optique ou une partie d'un émetteur optique, la surface d'un corps de base (1; 8) en verre de quartz étant au moins occupée d'une couche de réflecteur (7a; 9), **caractérisé en ce que** qu'une barbotine aqueuse contenant des particules SiO₂ est produite et est appliquée sur la surface du corps de base (1; 8) en formant une couche de barbotine (7), **en ce que** la couche de barbotine (7) est séchée et ensuite est vitrifiée en formant une couche de recouvrement de SiO₂ (7a, 9) qui se compose d'un matériau de nature propre par rapport au corps de base (1 ; 8), où les teneurs en SiO₂ se différencient entre la couche de recouvrement et le corps de base de maximal 3 pour cent en poids, les particules de SiO₂ étant fabriquées par broyage humide de granulés d'origine de SiO₂.

18. Procédé selon la revendication 17, **caractérisé en ce que** les particules de SiO₂ présentent des tailles de particules dans la plage maximale de 500 µm, de préférence 100µm, les particules de SiO₂ avec une taille de particule comprise entre 1 µm et 50 µm représentant la plus grande teneur en volume.

19. Procédé selon l'une des revendications 17 ou 18, **caractérisé en ce que** la vitrification de la couche de barbotine séchée (7a) s'effectue dans une atmosphère d'hydrogène.

20. Procédé selon l'une des revendications 17 à 19 **caractérisé en ce que** des substances de dopage sont ajoutées sous forme de composés contenant de l'aluminium, de l'azote ou du carbone à la barbotine.

21. Procédé selon l'une des revendications 17 à 20, **caractérisé en ce que** qu'au moins une substance de dopage est incorporée dans la barbotine, substance qui génère dans le verre de quartz dans la plage spectrale ultraviolette, visible ou infrarouge une absorption optique et provoque ainsi une réflexion sélective de la couche de réflecteur.
